Europäisches Patentamt

European Patent Office

Office européen des brevets

(19)

(11) **EP 1 448 659 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.[7]: **C08G 63/80**, C08G 63/88,
C08G 63/90, C08G 63/78,
B29B 13/02, B29B 9/16,
B01J 19/18

(21) Anmeldenummer: 02760309.1

(22) Anmeldetag: **06.08.2002**

(86) Internationale Anmeldenummer:
**PCT/EP2002/008769**

(87) Internationale Veröffentlichungsnummer:
**WO 2003/046045 (05.06.2003 Gazette 2003/23)**

(54) **VERFAHREN UND VORRICHTUNG ZUR HERSTELLUNG VON HOCHKONDENSIERTEN POLYESTERN IN DER FESTEN PHASE**

METHOD AND DEVICE FOR PRODUCING HIGHLY CONDENSED POLYESTERS IN THE SOLID PHASE

PROCEDE ET DISPOSITIF POUR REALISER DES POLYESTERS FORTEMENT CONDENSES EN PHASE SOLIDE

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **30.11.2001 DE 10158793**

(43) Veröffentlichungstag der Anmeldung:
**25.08.2004 Patentblatt 2004/35**

(73) Patentinhaber: **Zimmer Aktiengesellschaft 60388 Frankfurt am Main (DE)**

(72) Erfinder:
• **OTTO, Brigitta**
**14715 Milow (DE)**
• **REITZ, Hans**
**61191 Rosbach (DE)**
• **ALSHEIMER, Gerd**
**63477 Maintal (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
EP-A- 0 222 714     EP-A- 0 712 703
US-A- 5 090 134     US-A- 5 558 678

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung und ein kontinuierliches oder diskontinuierliches Verfahren zur Herstellung von hochkondensierten Polyestern in der festen Phase unter Einsatz einer Kristallisation mit oder ohne anschließende Festphasenpolykondensation zur Herstellung von Flaschen, Folien, Filmen und hochfesten technischen Fäden.

Die bekannten aromatischen Polyester oder Copolyester, insbesondere Polyetylenterephthalat und dessen Copolymere mit geringen Anteilen von beispielsweise Isophthalsäure oder Cyclohexandimethanol, Polybutylenterephthalat, Polytrimethylenterephthalat, Polyethylennaphthalat und deren Copolyestern, die als Rohstoff für Fasern, Filme und Verpackungen dienen, werden so vorbereitet, daß die Polyesterschmelze in der Schmelzepolykondensationsstufe auf eine mittlere Endviskosität gebracht wird. Der mittlere Polykondensationsgrad, ausgedrückt in der Intrinsischen Viskosität (I.V.), bewegt sich bei Polyethylenterephthalat und seinen entsprechend niedrig modifizierten Copolyestern nach der Schmelzepolykondensation im Bereich zwischen 0.30 - 0.90 dl/g.

Da die Herstellung von Granulaten mit einer I.V. über 0.65 dl/g, insbesondere in konventionellen Autoklaven, kaum möglich ist und hohe Viskositäten > 0.80 dl/g eine wesentliche Kapazitätseinschränkung in der Schmelzepolykondensation nach sich ziehen und außerdem die Polyester für Lebensmittelverpackungen einen sehr niedrigen Acetaldehydwert erfordern, wird nach dem Stand der Technik der Schmelzpolykondensation eine Festphasenpolykondensation (SSP) angeschlossen, die zu einer Erhöhung der I.V. im allgemeinen um 0.05 - 0,4 dl/g und zu einer Absenkung des Acetaldehydgehaltes von etwa 25 - 100 ppm auf Werte < 1 ppm im PET führt.

In dieser sich an die Schmelzepolykondensationsstufe anschließenden Festphasenpolykondensation wird somit die mittlere Viskosität derart angehoben, daß die für das entsprechende Verwendungsgebiet notwendigen Festigkeiten erreicht werden, der Acetaldehydgehalt bei Lebensmittelverpackungen entsprechend den Anforderungen abgesenkt und der austretende Oligomerenanteil auf ein Mindestmaß reduziert wird. Dabei ist es wichtig, daß außerdem der als Vinylester gebundene Acetaldehyd, auch als Depot-Acetaldehyd bezeichnet, soweit abgebaut wird, daß bei der Verarbeitung des Polyestergranulats zu Verpackungen, insbesondere zu Polyesterflaschen nach dem Streckblas- und Spritzstreckblasverfahren im Polyester nur ein minimaler Acetaldehyd nachgebildet wird. Speziell für die Abfüllung von Mineralwasser in Polyesterflaschen sollten in der Flaschenwand aus Polyethylenterephthalat weniger als 2 ppm Acetaldehyd enthalten sein.

Neben der SSP sind Verfahren zur Entaldehydisierung von Polyethylenterephthalat durch Behandlung mit Stickstoff oder mit trockener Luft, wie im US-Patent 4,230,819 beschrieben, bekannt. Um den geforderten niedrigen Acetaldehydgehalt im Material zu erhalten, werden Temperaturen bis etwa 230 °C verwendet. Bei Verwendung von Luft ist bei derart hohen Temperaturen mit einem starken thermooxidativen Abbau des Polyesters zu rechnen. Beim Einsatz von Stickstoff erhöhen sich die Kosten für das Gas und die aufwendige Reinigung.

Im US-Patent 4,223,128 werden Temperaturen bei Einsatz von Luft als Trägergas oberhalb 220 °C ausgeschlossen. Die gewünschte Erhöhung der I.V. wird mit Hilfe großer Mengen trockener Luft mit einem Taupunkt von -40 bis - 80 °C beschrieben. Bei der in den Beispielen dieses Patentes aufgeführten Behandlungstemperatur von 200 °C ist bei kontinuierlichen Verfahren, die ein mehr oder weniger breites Verweilzeitspektrum aufweisen, die oxidative Schädigung einzelner Granulatkörner nicht auszuschließen.

In der SSP wird eine Kettenverlängerung der Polyester in fester Phase, um die in einer Schmelze stärker auftretenden Nebenreaktionen möglichst gering zu halten, und eine Entfernung der schädlichen Nebenprodukte erreicht. Mit dieser Kettenverlängerung, die sich in einer Erhöhung der I.V. ausdrückt, können Produkte, wie Flaschen oder Reifencord, die eine höhere Festigkeit erfordern, hergestellt werden. Da Polyester jedoch teilkristalline Thermoplaste sind, weisen sie je nach Art einen mehr oder weniger großen amorphen Anteil auf. Diese Tatsache bereitet bei der Durchführung der SSP Schwierigkeiten, da die amorphen Anteile bei den für die SSP notwendigen Temperaturen zu Verklebungen führen, die sogar zum Stillstand der Produktionsanlage führen können.

Daher ist es außerdem bekannt, als Vorstufe zur SSP eine Kristallisation der teilkristallinen Chips aus der Schmelzepolykondensation zur Vermeidung der Klebeneigung unter Stickstoff- oder Luftatmosphäre, bei Temperaturen zwischen 160-210 °C durchzuführen, wie in den US-Patenten 4,064,112, 4,161,578 und 4,370,302 beschrieben.

In der WO 94/17122 wird eine 2-stufige Kristallisation mit Vorheizung und Zwischenkühlung vor der SSP zur Vermeidung von Verklebungen offenbart. Die beschriebene SSP-Temperatur liegt bei Temperaturen zwischen 205 und 230 °C.

Zur Verbesserung der Qualität der Chips kann, wie in JP 09249744 oder US 5,663,290 beschrieben, mit feuchtem Inertgas vor oder während der SSP gearbeitet werden oder, wie in dem US-Patent 5,573,820 offenbart, können die Chips vorher mit heißem Wasser oder direkt mit Wasserdampf intensiv bei Temperaturen bis zu 200 °C vor der Kristallisation behandelt werden. In diesem Fall ist aber bereits bei den üblichen Temperaturen von> 190 °C mit einem starken unerwünschten Abfall der I.V. durch Hydrolyse im PET zu rechnen.

Ein weiteres Verfahren ist die Behandlung der zu kristallisierenden Chips mit gereinigtem ungetrockneten Stickstoff aus der SSP im Gegenstrom in der zweiten Kristallisationsstufe, wie in EP 222 714 dargelegt. Der dort beschriebene Effekt zur Reduzierung des Acetaldehydgehaltes wird eher als geringfügig bewertet.

Diese Kristallisationsschritte haben das Ziel, den amorphen Anteil des Polyesters soweit zu reduzieren, dass die SSP verklebungsfrei durchgeführt werden kann.

Die grundsätzlichen Unterschiede zwischen dem Durchführen einer SSP und einer Kristallisation sind:

1. dass die Verweilzeiten in der Kristallisation erheblich kürzer sind, als in der SSP, wie durchschnittlich 3h im Vergleich zu 5 - 40h, und

2. in der Kristallisation die physikalischen Vorgänge überwiegen, wie beispielsweise einem in der Regel sehr geringen Anstieg der I.V. von 0,01 bis 0,02 dl/g zu entnehmen, während in der SSP chemische Reaktionen stattfinden, wie an einem Anstieg der I.V. von in der Regel 0,2 bis 0,3 dl/g zu sehen.

Der Erfindung liegt daher die Aufgabe zugrunde, ein Verfahren zur Herstellung von Polyestern in der festen Phase zur Verfügung zu stellen, das einfach durchführbar ist und mit dem gleichzeitig die besonders hohen Qualitätsansprüche an Polyester für Verpackungen bezüglich Farbe, Molmassenverteilung, Acetaldehydgehalt, Acetaldehydnachbildung, Oligomerenanteil und Klebeneigung, und eine signifikante Reduzierung des Abfalls und der Staubbildung beibehalten oder verbessert werden.

Diese Aufgabe wird erfindungsgemäß durch ein Verfahren zur Herstellung von Polyestern gelöst, umfassend eine Kristallisation eines Polyestermaterials, dadurch gekennzeichnet, dass die Kristallisation in zwei Stufen durchgeführt wird, wobei

- in der 1. Stufe teilkristallines Polyestermaterial bereit gestellt wird, und

- in der 2. Stufe das teilkristalline Polyestermaterial bei für die Kristallisation geeigneten Temperaturen (i) unter mechanischer Störung und Gas im Gegenstrom, (ii) unter mechanischer Störung und Gas im Gleichstrom, und (iii) ohne mechanische Störung und Gas im Gleichstrom fließt.

Das vorliegende Verfahren ist geeignet zur Herstellung von Granulaten teilkristalliner aromatischer Polyester oder Copolyester, erhältlich aus einer oder mehreren Dicarbonsäuren bzw. deren Methylestem, wie Terephthalsäure, Isophthalsäure, Naphthalindicarbonsäure und/oder 4,4-Bisphenyldicarbonsäure und einem oder mehrerer Diole, wie Ethylenglykol, Propylenglykol, 1,4-Butandiol, 1,4-Cyclohexandimethanol, Neopentylglykol und/oder Diethylenglykol.

Diese Ausgangsverbindungen können in an sich bekannter Weise nach dem kontinuierlichen oder diskontinuierlichen Verfahren der Ver- oder Umesterung unter Verwendung von bekannten Katalysatoren mit einer sich anschließenden Schmelzepolykondensation unter Vakuum zu Polyestermaterial, vorzugsweise zu Granulat verarbeitet werden.

Vorzugsweise werden Polyethylenterephthalat - Homopolymere und Copolymere mit einem Comonomerengehalt von kleiner 10 Ma-% verwendet.

In der 1. Stufe des erfindungsgemäßen Verfahrens wird teilkristallines Polyestermaterial bereitgestellt. Bevorzugt hat das teilkristalline Polyestermaterial einen Kristallisationsgrad von etwa 40 bis 48%.

Zum Bereitstellen des Polyestermaterials in der 1. Stufe des erfindungsgemäßen Verfahren, kann jedes geeignete teilkristalline Polyestermaterial verwendet werden. Das teilkristalline Polyestermaterial kann durch Kristallisieren eines aus der Schmelzepolykondensation erhaltenen Polyestermaterials erhalten werden. Bevorzugt kann, um das Polyestermaterial in der 1. Stufe des erfindungsgemäßen Verfahrens bereitzustellen, amorphes Polyestermaterial erhältlich nach der Schmelzepolykondensation, vorzugsweise Granulat, in der 1. Stufe zur Erhöhung des Kristallisationsgrad auf etwa 40 bis etwa 48% unter Verwirbelung mit einem Gasstrom bei geeigneten Temperaturen und Verweilzeiten behandelt werden. Bevorzugte Temperaturen liegen im Bereich von etwa 170 bis etwa 210°C und bevorzugte Verweilzeiten betragen von bis zu etwa 30 min., vorzugsweise etwa 10 bis etwa 30 min..

Das zur Verwirbelung verwendete Gas ist vorzugsweise Luft und/oder Stickstoff.

Die Herstellung des teilkristallinen Polyestermaterials wird vorzugsweise mittels eines Wirbelbettreaktors durchgeführt. Insbesondere bevorzugt wird die 1. Stufe der Kristallisation in zwei Zonen durchgeführt, wobei die Kristallisation in der ersten Zone 1 in einem Wirbelbett mit Mischcharakteristik und in der zweiten Zone 2 in einem Wirbelbett mit kontrollierter Granulatströmung durchgeführt wird.

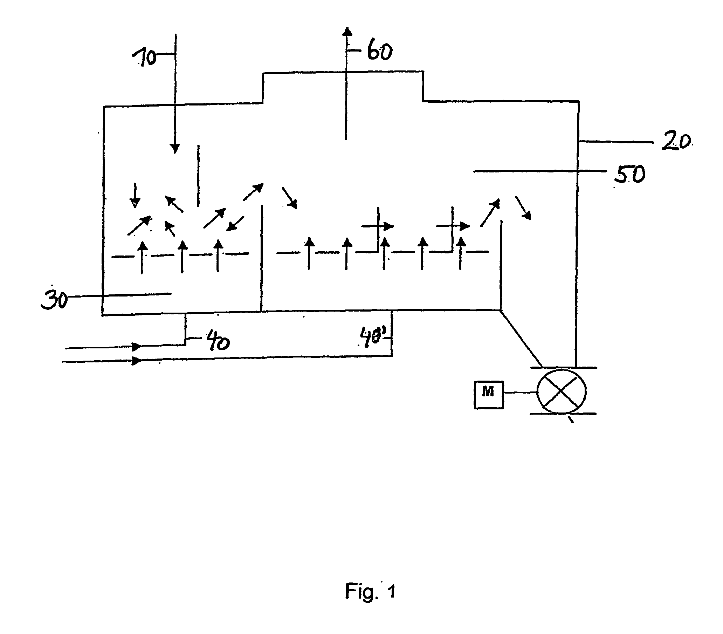

Fig. 1 zeigt eine bevorzugte Ausführungsform eines Wirbelbettreaktors 20, mit dem die Kristallinität eines Polyester-Granulats auf den gewünschten Grad, insbesondere auf 40 bis 48%, erhöht wird. Dabei wird das Granulat über ein Förderorgan 10 in einen mit rechteckigen Fluidisierungsflächen ausgestatteten Wirbelbettkristallisator 20 mit zwei Zonen 30,50 geführt, in dem das Granulat unter ansteigenden Temperaturen von 170 - 210 °C und gegebenenfalls trokkenem Gas mit einem Taupunkt von 20 bis -50 °C kristallisiert wird.

Das Gas/Chipsverhältnis kann in der ersten Zone 3-4 und in der zweiten Zone 2-3, bei einer Verweilzeit von 10-30 min., betragen.

Wie in Fig. 1 dargestellt, kann die Gasführung in der Art erfolgen, dass das Gas über ein Lochblech verteilt, in die erste Zone 30 über eine Gaseinlassöffnung 40 mit einer Gasgeschwindigkeit von 3,2 - 4 m /sec und in die zweite Zone 50 über eine Gaseinlassöffnung 40' mit einer Gasgeschwindigkeit von 2,1 - 2,7 m/sec. gelangt (Leerraumgeschwindigkeit) und über einen gemeinsamen Gasaustritt 60 im oberen Bereich den Kristallisator wieder verlässt. Diese Art der Gasführung führt in der ersten Zone 30 zu einem Wirbelbett mit Mischcharakteristik und in der zweiten Zone 50 zu einer Verwirbelung mit kontrollierter Granulatströmung. Der Staubanteil am Austritt des Kristallisators beträgt < 10 ppm.

Das nach der ersten Stufe der Kristallisation erhaltene Granulat hat vorzugsweise einen Kristallisationsgrad im Chip von etwa 40 - 48 %.

Das erfindungsgemäß verwendbare, teilkristalline Polyestermaterial, vorzugsweise Granulat, fließt in einer 2. Stufe bei für die Kristallisation geeigneten Temperaturen (i) unter mechanischer Störung und Gas im Gegenstrom, (ii) unter mechanischer Störung und Gas im Gleichstrom, und (iii) ohne mechanische Störung und Gas im Gleichstrom.

Unter "fließen" des Polyestermaterials im Sinne der vorliegenden Erfindung wird eine Bewegung des Polyestermaterials in einer Richtung verstanden, wobei die Bewegung beispielsweise durch Gravitation und/oder mechanisches Fördern bewirkt werden kann.

Die Schritte (i) bis (iii) der 2. Stufe des erfindungsgemäßen Verfahrens werden besonders bevorzugt kontinuierlich durchgeführt, d.h. das Polyestermaterial durchläuft die Schritte (i) bis (iii) im einem kontinuierlichen Strom. Das Polyestermaterial kann jedoch auch chargenweise in den Schritten (i) bis (iii) behandelt werden. Bevorzugt werden die Schritte (i) bis (iii) in der angegebenen Reihenfolge durchgeführt. Es ist jedoch möglich, die Schritte (i) bis (iii) in jeder anderen Reihenfolge durchzuführen.

Das in der 2. Stufe (i) bis (iii) verwendete Gas ist vorzugsweise Luft oder Stickstoff, insbesondere Stickstoff.

Die in der 2. Stufe (i) bis (iii) für die Kristallisation geeignete Temperatur beträgt vorzugsweise etwa 190 bis etwa 220 °C, bevorzugter 190 bis 215 °C, und insbesondere 200 bis 210 °C.

Die Verweilzeit des Polyestermaterials in der 2. Stufe (i) beträgt vorzugsweise etwa 30 bis etwa 60 min., in der 2. Stufe (ii) etwa 30 bis etwa 60 min., und in der 2. Stufe (iii) etwa 60 bis etwa 180 min.

Insbesondere bevorzugt wird die 2. Stufe der Kristallisation in drei Zonen eines Schachtkristallisators durchgeführt, nämlich Zone 3, 4 und 5, in denen die Schritte (i) bis (iii) der 2. Stufe durchgeführt werden. In Zone 3 wird das Granulat unter periodisch auftretenden mechanischen Störungen mit Gas im Gegenstrom, in der Zone 4 unter periodisch auftretenden mechanischen Störungen mit Gas im Gleichstrom und in Zone 5 keiner mechanischen Störung und Gas im Gleichstrom unterworfen.

Die 2. Stufe der Kristallisation wird vorzugsweise in einer erfindungsgemäßen Vorrichtung zur Herstellung von Polyestern durchgeführt Die erfindungsgemäße Vorrichtung (70) zum Kristallisieren von Polyestermaterial in Granulatform, wie einem Schachtkristallisator, umfasst drei aufeinanderfolgende Abschnitte (80, 90, 100), wenigstens eine Einlassöffnung (110), die im ersten Abschnitt (80) vorgesehen ist, wenigstens eine Auslassöffnung (12), die im dritten Abschnitt (100) vorgesehen ist, eine Einrichtung zum Bewirken einer mechanische Störung des Polyestermaterials (130), die im ersten und zweiten Abschnitt (80, 90) vorgesehen ist, wenigstens eine Gaseintrittöffnung (140), die im Übergangsbereich vom ersten und zweiten Abschnitt angeordnet ist, und wenigstens eine Gasaustrittöffnung (150, 160), die sowohl im ersten als auch im dritten Abschnitt vorgesehen ist.

In einer bevorzugten Ausführungsform umfasst die erfindungsgemäße Vorrichtung eine Einrichtung zur Erzeugung einer periodischen mechanischen Störung (130) mit einer Welle (170), an der wenigstens ein, vorzugsweise sechs oder mehr, Arme (180, 180') vorgesehen sind, die durch Drehung der Welle (170) eine periodische, mechanische Störung des fließenden Polyestermaterials bewirken. Die Einrichtung kann auch eine erste Welle und eine zweite Welle umfassen, wobei an jeder Welle wenigstens ein Arm vorgesehen ist.

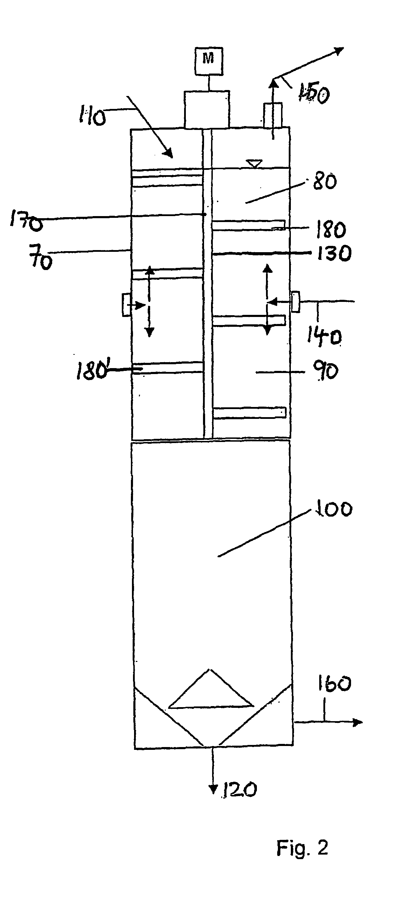

Fig. 2 zeigt eine bevorzugte Ausführungsform für eine erfindungsgemäße Vorrichtung, nämlich einen Schachtkristallisator 70, in dem die 2. Stufe des erfindungsgemäßen Verfahrens durchgeführt werden kann. Das Granulat wird in der 2. Stufe, wie in Fig. 2 dargestellt, in einen kontinuierlich arbeitenden, senkrecht stehenden dreiteiligen Schachtkristallisator 70 mit einer, in der Längsachse installierten zentrierten drehbaren Welle 170 eingebracht. Im ersten und zweiten Abschnitt 80, 90 des Schachtkristallisators, Zone 3 und 4, sind Arme 180, 180' mit geringem Strömungswiderstand in bestimmten Abständen an der Welle angebracht, durch die eine periodische mechanische Störung des Schüttgutes erreicht wird. Aufgrund der Granulatbewegung wird eine Agglomeratbildung (Verklebung) des Materials verhindert. Im dritten Abschnitt 100 des Schachtkristallisators wird das Granulat in Zone 5 ohne Störung behandelt.

In der 3. und 4. Zone wird das Granulat periodisch mechanisch gestört, während in der 5. ungestörten Zone eine Verweilzeitvergleichmäßigung bei beginnender Postpolykondensation stattfindet

Die Gasführung erfolgt in der Art, dass das Gas zwischen der 3. und 4. Zone (erster und zweiter Abschnitt des Schachtkristallisators) über eine Gaseinlassöffnung 140 zugeführt wird und den Kristallisator im oberen bzw. ersten Abschnitt 80 über eine Gasaustrittsöffnung 150 und anteilmäßig auch unteren bzw. dritten Abschnitt 100 über eine Gasaustrittsöffnung 160 wieder verlässt. Dabei wird das Gas in der 3. Zone (erster Abschnitt des Schachtkristallisators) im Gegenstrom zum Granulat und in der 4. und 5. Zone im Gleichstrom (zweiter und dritter Abschnitt des Schachtkristallisators) geführt.

Die Gasaustrittöffnungen (150, 160) sind dabei bevorzugt so angeordnet, dass das durch die Gaseintrittöffnung (140) eingeleitete Gas möglichst lange mit dem Granulat im Gegen- bzw. im Gleichstrom geführt wird, d.h. am Anfang des ersten Abschnitts (80) und am Ende des dritten Abschnitt (100) des Schachtkristallisators (70).

In der 3. Zone (erster Abschnitt 80 des Schachtkristallisators 70) wird das PET-Granulat unter periodisch einwirkender mechanischer Störung bevorzugt mittels heißem Gas, insbesondere Stickstoff, im Gegenstrom zum Granulat mit einem Gas-Schnitzelverhältnis von 1-3 und einer Verweilzeit von 30-60 min. auf 190-220 °C aufgeheizt.

In der 4. Zone (zweiter Abschnitt 90 des Schachtkristallisators 70) wird das PET unter periodisch einwirkender mechanischer Störung bevorzugt bei 190-220 °C mit dem Gas, insbesondere Stickstoff, im Gleichstrom bei einem Gas-Chip-Verhältnis von 0.5-1 weiter kristallisiert und vergleichmässigt. Die Verweilzeit beträgt 30-60 min.

Das in der 3. und 4. Zone auf diese Weise behandelte PET-Granulat wird bevorzugt in der ungestörten 5. Zone (Abschnitt 100 des Schachtkristallisators 70) bei einer Temperatur von 190-215 °C im Gleichstrom mit einem Gas/Schnitzel-Verhältnis von 0.1-1 in der Weise behandelt, dass bei einer mittleren Verweilzeit von 60-180 min., neben der Aldehyd-Reduzierung und Kristallisation, hier bereits eine geringe Postpolykondensation stattfindet. Nach dem erfindungsgemäßen Verfahren wird dadurch die Klebeneigung des Granulates wesentlich verringert.

Die Gesamtverweilzeit des Polyestermaterials in der 1. und 2. Stufe der Kristallisation, wenn diese die vorstehend beschriebenen die Zonen 1 bis 5 umfasst, beträgt vorzugsweise zwischen 100 - 350 min., insbesondere 130 - 330 min., wobei das Verweilzeitverhältnis, in der 1. Stufe im Vergleich zur Verweilzeit in der 2. Stufe 1: 4 bis 1: 32 ist. Insbesondere bevorzugt beträgt das Verweilzeitverhältrüs in der 1. und 2. Stufe der Kristallisation, wenn diese Stufen die Zonen 1 bis 5 umfassen, eine Verweilzeit in den Zonen 3 und 4, die 4- bis 6-mal so lange ist, wie in den Zonen 1 und 2 und eine Verweilzeit in der Zone 5, die 2-bis 3-mal so lange ist, wie in den Zonen 3 und 4.

Das im erfindungsgemäßen Verfahren eingesetzte Polyestermaterial hat bevorzugt eine I.V. von mindestens etwa 0,3 dl/g, bevorzugter etwa 0,3 dl/g bis etwa 0,9 dl/g, noch bevorzugter etwa 0,3 dl/g bis 0,8 dl/g, besonders bevorzugt etwa 0,66 dl/g bis 0,9 dl/g, insbesondere etwa 0,72 bis 0,8 dl/g. Insbesondere bevorzugt wird ein Polyestermaterial eingesetzt, das eine I.V. von mindestens etwa 0,66 dl/g, bevorzugter etwa 0,66 bis 0,8 dl/g und insbesondere etwa 0,72 bis 0,8 dl/g hat, da das dabei erhaltene Material einen gewünscht niedrigen Gehalt an Acetaldehyd aufweist, nämlich < 10 ppm, insbesondere < 1 ppm, und daher geeignet ist, ohne anschließende SSP zu Polyesterformkörpem, bei denen ein niedriger Acetaldehydgehalt erforderlich ist, wie Flaschen, weiterverarbeitet zu werden. Überraschend wurde somit gefunden, dass beim Durchführen des erfindungsgemäßen Verfahrens Polyestermaterial, wie Granulat, mit einer hohen I.V. eingesetzt werden kann.

Wenn Polyestermaterial mit einer I.V. von mindestens etwa 0,3 dl/g bis etwa 0,72 dl/g eingesetzt wird, wird vorzugsweise danach eine SSP durchgeführt.

Da teilkristalliner Polyester während der Kristallisation im Kristallisator und im folgenden Festphasenpolykondensationsreaktor durch eine hohe exotherme Wärmeentwicklung zu erhöhter Agglomeratbildung neigen kann und diese Verklebungen so stark sein können, daß sie sich bei der Anwendung üblicher Kristallisations- und Festphasenpolykondensationsverfahren nicht mehr voneinander lösen, ist es bevorzugt, im erfindungsgemäßen Verfahren kugelförmiges Polyestermaterial einzusetzen. Es können jedoch auch andere Granulatformen eingesetzt werden, wie zylinderförmiges oder schuppenförmiges Granulat.

Zylindrischen Granulate sind jedoch nicht bevorzugt, da sie wegen der Flächen und Kanten leichter verkleben und der Abrieb größer ist. Durch die Asymmetrie der zylindrischen Chips ist eine gleichmäßige Kristallisation vom Mantel zum Kern des Chips schwierig. Der Einsatz von annähernd kugelförmigen Chips hat im Vergleich zum gleichgewichtigen zylindrischen Chip die Vorteile einer gleichmäßigeren Kristallisation, einer verbesserten Molmassenverteilung im Chip und eines 5 - 10 % höheren Schüttgewichts. Als weiterer wesentlicher Vorteil ist der bei Verwendung von kugelförmigen Chips niedrigere anfallende Staubanteil zu sehen.

Insbesondere bevorzugt hat das eingesetzte Granulat eine Oberfläche von 1,45 - 2.0 m$^2$/kg, vorzugsweise 1,50 bis 1,85 m$^2$/kg.

Das mit dem erfindungsgemäßen Verfahren erhaltene Granulat hat vorzugsweise einen einheitlichen Kristallisationsgrad von etwa 49 bis etwa 53 %, insbesondere etwa 52 %, und ist in dieser Kristallisationstechnologie so vorbehandelt, dass Verklebungen des PET-Granulates infolge exothermen Reaktionen in einer gegebenenfalls nachfolgenden Feststoffnachkondensation vermieden werden.

Das erfindungsgemäß erhaltene Granulat hat vorzugsweise einen Acetaldehydgehalt von <10 ppm, besonders bevorzugt 0.5-5 ppm und insbesondere < 1 ppm.

Der Staubanteil des Granulats beträgt vorzugsweise nach der erfindungsgemäßen Kristallisation <10 ppm.

Überraschenderweise hat sich gezeigt, daß bei der Anwendung des erfindungsgemäßen Verfahrens mit der 2-stufigen Kristallisation, insbesondere durch Verwendung einer Wirbelbett- und Schachtkristallisation, ein Polyestergranulat mit geringem Acetaldehydwert, geringer Acetaldehydreformation, hervorragender Farbbrillanz, sehr kleinen Staubwerten, ohne Verklebungen und beim Einsatz von Chips mit hohen I.V. zwischen 0.66 - 0.90 dl/g aus der Schmelzepolykondensation, wobei auf eine anschließende Festphasenpolykondensation verzichtet werden kann, hergestellt werden kann.

Das erfindungsgemäß erhaltene Granulat hat bevorzugt eine I.V. - Schwankung von weniger als 1,5%.

Die vorliegende Erfindung betrifft außerdem ein Verfahren zur Herstellung von Polyesterformkörpern, wobei Polyestermaterial, insbesondere Granulat, erhältlich nach dem erfindungsgemäßen Verfahren ohne Festphasenpolykondensation verwendet wird.

Insbesondere kann Polyestermaterial, besonders in Form von Granulat oder Chips, das mit dem erfindungsgemäßen Verfahren hergestellt wurde und mit einer I.V. aus der Schmelzepolykondensation von > 0.66 dl/g, direkt ohne weitere Aufkondensation in einem Festphasenpolykondensationsreakior der Verarbeitung im Streckblas- oder Spritzstreckblasvertahren zur Herstellung der Polyesterformkörper zugeführt werden. Andererseits kann Polyestermaterial geringerer I.V. nach der Schmelzepolykondensation und nach dem erfindungsgemäßen Kristallisationsverfahren anschließend einer üblichen Festphasenpolykondensation, die sowohl kontinuierlich oder diskontinuierlich arbeitet, unterzogen werden und sodann zur Herstellung von Polyesterformkörpem verwendet werden.

Die Polyesterformkörper werden vorzugsweise ausgewählt aus der Gruppe, bestehend aus Flaschen, Folien, Filmen und hochfesten technischen Fäden.

Die Erfindung wird nunmehr anhand einiger, in keiner Weise einschränkender Ausführungsbeispiele näher beschrieben. Die angegebenen Eigenschaftswerte wurden hierbei wie folgt ermittelt:

Die Intrinsic-Viskosität (I.V.) wurde bei 25 °C an einer Lösung von 500 mg Polyester in 100 ml eines Gemisches aus Phenol und 1 2-Dichlorbenzol (3:2 Gew.-Teile) gemessen.

Die COOH-Endgruppenkonzentration wurde mittels photometrischer Titration mit 0,05 ethanolischer Kalilauge gegen Bromthymolblau einer Lösung eines Polyesters in einem Gemisch aus o-Kresol und Chloroform (70:30 Gew. -Teile) bestimmt.

Die Bestimmung von Diethylenglykol (DEG), Isophthalsäure (IPA) und 1,4-Cyclohexandimethanol (CHDM) im Polyester erfolgt mittels Gaschromatographie nach vorangegangener Methanolyse von 1 g Polyester in 30 ml Methanol unter Zusatz von 50 mg/l Zinkacetat im Bombenrohr bei 200 °C.

Die Messung des Trübungswertes in "nephelometrischen Trübungseinheiten" (NTU) erfolgte an einer 10 Gew.-%-igen Lösung von Polyester in Phenol/Dichlorbenzol (3:2 Gew.-Teile) mit einem Nephelometer der Fa. Hach (Typ XR, nach US-Patent 4 198 161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung der Farbwerte L und b erfolgte nach HUNTER. Die Polyesterchips wurden zunächst im Trokkenschrank bei 135 ± 5 °C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$$L = 10 \sqrt{Y}$$

und

$$b = \frac{7,0}{\sqrt{Y} \, (Y - 0,8467 \, Z)}$$

ist.

Der Acetaldehyd wurde durch Erhitzen in einem geschlossenen Gefäß aus Polyester ausgetrieben und der Acetaldehyd im Gasraum des Gefäßes gaschromatographisch mit dem Head space-Injektionssystem H540, Perkin Elmer; Trägergas: Stickstoff; Säule: 1,5 m Edelstahl; Füllung: Poropack Q, 80 - 100 mesh; Probemenge: 2g; Heiztemperatur: 150 °C. Heizdauer: 90 min. bestimmt.

Zur Bestimmung der Acetaldehydwiederbildungsrate wurden PET-Chips gemahlen und das Mahlgut in einem Thermodesorber unter definierten Bedingungen aufgeschmolzen (300 °C und drei Verweilzeiten: 12 - 25 min.). Der Gehalt des entstandenen und auf Tenax adsorbierten Acetaldehyds wurde anschließend gaschromatografisch bestimmt.

Die Staubanalyse wird gravimetrisch durchgeführt. Dazu werden 1 kg Chips mit Methanol gewaschen, das Waschmittel über ein Filter abfiltriert und der Rückstand getrocknet und gewogen.

Beispiel 1 (Vergleich)

Im Beispiel 1 wurden annähernd amorphe zylindrische Chips mit einem Gewicht von 15.5 mg/Chip und mit einer Oberfläche von 1.85 m$^2$/kg, einem Schüttgewicht von 790 kg/m$^3$ und einer I.V. von 0.612 dl/g , aus dem Schmelzepolykondensationsverfahren zur Herstellung von leicht modifiziertem PET für Flaschen für die Befüllung mit Süßgetränken mit Gas (CSD), Wasser oder anderen Füllmedien kristallisiert und festphasenpolykondensiert.

Beispiel 2

Im Beispiel 2 wurden annähernd runde Chips mit einem Gewicht von 15.5 mg, einer Oberfläche von 1.55 m$^2$/kg und einem Schüttgewicht von 840 kg/m$^3$ eingesetzt und nach dem erfindungsgemäßen Verfahren kristallisiert und anschließend nach Standardverfahren festphasenpolykondensiert.

Einsatzmaterial in den Beispielen 1 und 2:

Katalysatorgehalt Sb: 200 ppm , Phosphorgehalt:17 ppm, Cobalt: 15 ppm, Blauer Farbstoff: 0.5 ppm, IPA:2 Ma-%, DEG: 1.3 Ma-%.

Die Ergebnisse des Beispiels 1 werden in der Tabelle 1.1 und die Ergebnisse aus dem Beispiel 2 in Tabelle 1.2 dargestellt.

Tabelle 1.1

| Beispiel 1 (Standardkristallisation mit nachfolgender SSP) | | | | |
|---|---|---|---|---|
| Analysen | Einsatzmaterial Zylindrische Chipsform | 1. Kristallisator Wirbetbettkristallisator VWZ: 60min. T: 200°C | 2. Kristallisator Schaufelkristallisator VWZ: 75min. T: 219°C | SSP WVZ:12 Std. T: 208.5°C Delta I.V.= 0.200[dl/g] |
| I.V. [dl/g] | 0.612 | 0.617 | 0.621 | 0.812 |
| COOH [mmol/kg ] | 27 | 28 | 26 | 28 |
| DSC: Tm/Tk/Tg [°C] | 250/143/78 | | | 250.5 /145 /79.7 |
| Farbe L | 82.7 | 84.9 | 87.7 | 89 |
| Farbe a | -1.6 | -1.4 | -1.4 | -1.4 |
| Farbe b | -3.6 | -0.8 | -0.7 | -0.5 |
| AA [ppm] | 45 | 9.1 1 | 3.5 | 0.5 |
| KTG [°C] | - | 48.5 | 51 | 55.6 |
| AA-Nachbildung [ppm] | - | | | 9.7 |
| Staub [ppm] | - | < 10 | > 500 | > 500 |
| VWZ = Verweilzeit, T = Temperatur | | | | |

Tabelle 1.2

| Beispiel 2 | | | | |
|---|---|---|---|---|
| Analysen | Einsatzmaterial Kugelförmige Chipsform | 1. Kristallisation (Zone 1 und 2) Wirbelbettkristallisator VWZ: 60min. T: 200°C | 2. Kristallisation Schachtkristallisator (Zonen 3 bis 5) VWZ: 180min. T: 215°C | SSP VWZ: 12Std. T: 207.5°C Delta I.V.= 0.240[dl/g] |
| I.V. [dl/g] | 0.602 | 0.616 | 0.636 | 0.842 |
| COOH [mmol/kg] | 30 | 27 | 26 | 26 |
| DSC Tm/Tk/Tg [°C] | 250/143/78.4 | - | - | 251/145/80. 1 |

Tabelle 1.2   (fortgesetzt)

| Beispiel 2 | | | | |
|---|---|---|---|---|
| Analysen | Einsatzmaterial Kugelförmige Chipsform | 1. Kristallisation (Zone 1 und 2) Wirbelbettkristallisator VWZ: 60min. T: 200°C | 2. Kristallisation Schachtkristallisator (Zonen 3 bis 5) VWZ: 180min. T: 215°C | SSP VWZ: 12Std. T: 207.5°C Delta I.V.= 0.240[dl/g] |
| Farbe L | 83 | 85.1 | 88.1 | 89.4 |
| Farbe a | -1.7 | -1.4 | -1.3 | -1.3 |
| Farbe b | -3.3 | -1.0 | -0.6 | -0.6 |
| AA [ppm] | 55 | 8.8 | 1 | 0.2 |
| KTG [°C] | - | 46.1 | 53.1 | 55.2 |
| AA-Nachbildung [ppm] | - | | | 9.3 |
| Staub [ppm] | <10 | <10 | <10 | <10 |

Beispiele 3 und 4

In einem weiteren Versuch wurden annähernd runde Chips mit einem Gewicht von 15.5 mg und mit einer Oberfläche von 1.55 $m^2$/kg, einem Schüttgewicht von 840 kg/$m^3$ und einer hohen I.V. von 0.79 - 0.80 dl/g, hergestellt nach dem Schmelzepolykondensationsverfahren, mit zwei verschiedenen Katalysatorsystemen nach dem erfindungsgemäßen Kristallisationsverfahren zu fertigem Flaschengranulat verarbeitet, so daß eine Weiterverarbeitung der leicht modifizierten PET-Chips zu Flaschen für die Befüllung mit Süßgetränken, Wasser und anderen Füllgütern ohne weiteres möglich wurde. Die Ergebnisse werden in den Tabellen 2.1 und 2.2 dargestellt.

Einsatzmaterial im Beispiel 3, Tabelle 2.1.

Katalysatorgehalt Antimon (Sb): 250 ppm ,Phosphorgehalt: 50 ppm, Cobalt: 25 ppm, Blauer Farbstoff: 1.0 ppm, IPA :2.0 Ma %, DEG: 1.3 Ma %

Tabelle 2.1.

| Beispiel 3 | | | |
|---|---|---|---|
| Analysen | Einsatzmaterial Kugelförmige Chipsform Katalysator. 250 ppm Sb | 1. Kristallisation (Zonen 1 und 2) Wirbelbettkristallisator VWZ: 60min. T: 200°C | 2. Kristallisation (Zonen 3 bis 5) Schachtkristallisator VWZ: 180min. T: 215°C Delta I.V.= 0.017[dl/g] |
| I.V. [dl/g] | 0.804 | 0.799 | 0.812 |
| COOH [mmol/kg] | 22 | 20 | 18 |
| DSC Tm/Tk/Tg [°C] | 248/152/79 | | |
| Farbe L | 76 | 85 | 86.5 |
| Farbe a | -2 | -1.7 | -1.5 |
| Farbe b | -5.5 | -3.3 | -2 |
| AA [ppm] | 80 | 15 | 3.2 |
| KTG [°C] | - | 47.1 | 52.6 |
| AA-Nachbildung[ppm ] | | | 9.5 |
| Staub [ppm] | <10 | <10 | <10 |

Einsatzmaterial im Beispiel 4, Tabelle 2.2

Katalysatorgehalt ECOCAT B ®: Metall 5 ppm, Phosphorgehalt:10 ppm, blauer/roter Farbstoff: 1.5/1.25 ppm , IPA :2.0 Ma-%, DEG:1.3 Ma-%,

Tabelle 2.2

| Beispiel 4 | | | |
|---|---|---|---|
| Analysen | Einsatzmaterial Kugelförmige Chipsform Katalysator. ECOCAT B ® 5 ppm Metall | 1. Kristallisation (Zonen 1 und 2) Wirbelbettkristallisator VWZ:60min./T: 200°C | 2. kristallisation (Zonen 3 bis 5) Schachtkristallisator VWZ:180min/ T:215°C Delta I.V.= 0.032 [dl/g] |
| I.V. [dl/g] | 0.795 | 0.797 | 0.827 |
| COOH [mmol/kg] | 15 | 14 | 13 |
| DSC Tm/Tk/Tg [°C] | 248/152/79.5 | | |
| Farbe L | 72 | 81 | 84 |
| Farbe a | -3.5 | -2.2 | -2 |
| Farbe b | 1.4 | 1.7 | 1.9 |
| AA [ppm] | 40 | 7.9 | 0.8 |
| KTG [°C] | - | 47.8 | 52.7 |
| AA-Nachbildung [ppm] | | | 8.9 |
| Staub [ppm] | <10 | < 10 | <10 |

Vor der Verarbeitung zu Preforms und Flaschen an einer Einstufenmaschine von ASB (Injection strech blow moulding machine) vom Typ 250 EX HAT, 6 Kavitätenwerkzeug, mit einer Leistung von 800 - 1000 Flaschen / Stunde wurde dieses Material in einem Challenger Trockner bei 170 °C über 4 Stunden getrocknet.

Die Preform- und Flaschenherstellung verlief problemlos. Die Transparenz der Flaschen war gut und farbneutral. Der Acetaldehydgehalt nach der üblichen Headspacemethode lag bei den Flaschen nach dem erfindungsgemäßen Verfahren zwischen 1.6 -1.9 µg/l im Vergleich zu den Flaschen nach der herkömmlichen Festphasenpolykondensation mit zylindrischen Chips mit 2.2 - 2.6 µg/l. Die mechanischen Eigenschaften der Flaschen unterschieden sich nicht.

**Patentansprüche**

1.   Verfahren zur Herstellung von Polyestern, umfassend
eine Kristallisation eines Polyestermaterials, **dadurch gekennzeichnet, dass** die Kristallisation in zwei Stufen durchgeführt wird, wobei
in der 1. Stufe teilkristallines Polyestermaterial bereit gestellt wird, und
in der 2. Stufe das teilkristalline Polyestermaterial bei für die Kristallisation geeigneten Temperaturen (i) unter mechanischer Störung und Gas im Gegenstrom, (ii) unter mechanischer Störung und Gas im Gleichstrom, und (iii) ohne mechanische Störung und Gas im Gleichstrom fließt.

2.   Verfahren nach Anspruch 1, wobei das in der 1. Stufe bereitgestellte teilkristalline Polyestermaterial einen Kristallisationsgrad von etwa 40 bis etwa 48% hat

3.   Verfahren nach einem der vorstehenden Ansprüche, wobei das teilkristalline Polyestermaterial in der 1. Stufe dadurch bereitgestellt wird, dass das Polyestermaterial durch Verwirbelung in einem Gasstrom und ansteigenden Temperaturen von etwa 170 bis etwa 210 °C bei einer Verweilzeit von bis zu etwa 30 min. behandelt wird.

4.   Verfahren nach Anspruch 3, wobei die Verwirbelung des Polyestermaterials in einem Wirbelbettkristallisator durchgeführt wird.

**5.** Verfahren nach Anspruch 4, wobei in der 1. Stufe die Verwirbelung in einer 1. Zone in einem Wirbelbett mit Mischcharakteristik und in einer 2. Zone in einem Wirbelbett mit kontrollierter Granulatströmung durchgeführt wird.

**6.** Verfahren nach Anspruch 5, wobei die Verwirbelung mit Gas einer Gasgeschwindigkeit von etwa 3,2 bis 4 m/s in der 1. Zone und einer Gasgeschwindigkeit von etwa 2,1 bis 2,7 m/s in der 2. Zone durchgeführt wird.

**7.** Verfahren nach einem der vorstehenden Ansprüche, wobei die in der 2. Stufe verwendete Temperatur etwa 190 bis etwa 220 °C beträgt.

**8.** Verfahren nach einem der vorstehenden Ansprüche, wobei die Verweilzeit in der 2. Stufe (i) etwa 30 bis etwa 60 min., in der 2. Stufe (ii) etwa 30 bis etwa 60 min., und in der 2. Stufe (iii) etwa 60 bis etwa 180 min. beträgt.

**9.** Verfahren nach einem der vorstehenden Ansprüche, wobei die 2. Stufe in einem Schachtkristallisator durchgeführt wird.

**10.** Verfahren nach einem der vorstehenden Ansprüche, wobei das verwendete Polyestermaterial, Granulat, vorzugsweise kugelförmiges Granulat ist.

**11.** Verfahren nach einem der Ansprüche 2 bis 10, wobei die Gesamtverweilzeit des Polyestermaterials in der 1. und 2. Stufe etwa 100 bis 350 min. beträgt.

**12.** Verfahren nach einem der Ansprüche 2 bis 11, wobei das Verweilzeitverhältnis des Polyestermaterials in der ersten Stufe zu der 2. Stufe etwa 1:4 bis 1:32 ist.

**13.** Verfahren nach einem der vorstehenden Ansprüche, wobei das Polyestermaterial, das in der Kristallisation eingesetzt wird eine I.V. von mindestens 0,3 dl/g hat.

**14.** Verfahren zur Herstellung von Polyesterformkörpern, **dadurch gekennzeichnet, dass** Polyestermaterial erhältlich nach einem der vorstehenden Ansprüche ohne Festphasenpolykondensation verwendet wird.

**15.** Verfahren nach Anspruch 14, wobei die Polyesterformkörper ausgewählt werden aus der Gruppe, bestehend aus Flaschen, Folien, Filmen und hochfesten technischen Fäden.

**16.** Vorrichtung (70) zum Kristallisieren von Polyestermaterial in Granulatform mit drei aufeinanderfolgenden Abschnitten (80,90,100)
wenigstens einer Einlassöffnung (110), die im ersten Abschnitt (80) vorgesehen ist,
wenigstens einer Auslassöffnung (120), die im dritten Abschnitt (100) vorgesehen ist,
einer Einrichtung zum Bewirken einer mechanische Störung des Polyestermaterials (130), die im ersten und zweiten Abschnitt (80,90) vorgesehen ist,
wenigstens einer Gaseintrittöffnung (140), die im Übergangsbereich vom ersten und zweiten Abschnitt (80,90) angeordnet ist, und
wenigstens einer Gasaustrittöffnung (150,160), die sowohl im ersten (80) als auch im dritten Abschnitt (100) vorgesehen ist

**17.** Vorrichtung nach Anspruch 16, in welcher die Einrichtung (130) eine Welle (170) umfasst, an der wenigstens ein Arm (180) vorgesehen ist.

**18.** Vorrichtung nach Anspruch 16, in welcher die Einrichtung zum Bewirken einer mechanischen Störung des Polyestermaterials eine erste Welle und eine zweite Welle umfasst, wobei an jeder Welle wenigstens ein Arm vorgesehen ist.

**Claims**

**1.** A method for producing polyesters, comprising crystallization of a polyester material, **characterized in that** crystallization is carried out in two stages, wherein
in the first stage partly crystalline polyester material is provided, and
in the second stage the partly crystalline polyester material flows at temperatures suited for crystallization (i) under mechanical disturbance and gas in countercurrent flow, (ii) under mechanical disturbance and gas in concurrent flow, and (iii) without mechanical disturbance and gas in concurrent flow.

2. The method according to claim 1, wherein the partly crystalline polyester material provided in the first stage has a degree of crystallization of about 40 to 48%.

3. The method according to any one of the preceding claims, wherein the partly crystalline polyester material is provided in the first stage by treating the polyester material by vortexing in a gas flow and at rising temperatures of about 170 to about 210°C at a residence time of up to about 30 min.

4. The method according to claim 3, wherein the vortexing of the polyester material is carried out in a fluidized bed crystallizer.

5. The method according to claim 4, wherein in the first stage vortexing is carried out in a first zone in a fluidized bed with mixing properties and in a second zone in a fluidized bed with controlled granulate flow.

6. The method according to claim 5, wherein vortexing with gas is carried out at a gas rate of about 3.2 to 4 m/s in the first zone and at a gas rate of about 2.1 to 2.7 m/s in the second zone.

7. The method according to any one of the preceding claims, wherein the temperature used in the second stage is about 190 to about 220°C.

8. The method according to any one of the preceding claims, wherein the residence time in the second stage (i) is about 30 to about 60 min, in the second stage (ii) about 30 to about 60 min, and in the second stage (iii) about 60 to about 180 min.

9. The method according to any one of the preceding claims, wherein the second stage is carried out in a shaft type crystallizer.

10. The method according to any one of the preceding claims, wherein the polyester material used is granulate, preferably spherical granulate.

11. The method according to any one of claims 2 to 10, wherein the total residence time of the polyester material in the first and second stage is about 100 to 350 min.

12. The method according to any one of claims 2 to 11, wherein the residence time ratio of the polyester material in the first stage to the second stage is about 1:4 to 1:32.

13. The method according to any one of the preceding claims, wherein the polyester material used during crystallization has an I.V. of at least 0.3 dl/g.

14. A method for producing polyester molded articles, **characterized in that** polyester material is used that is obtainable according to any one of the preceding claims without a solid-state polycondensation.

15. The method according to claim 14, wherein the polyester molded articles are selected from the group consisting of bottles, sheets, films, and high-tenacity technical filaments.

16. Apparatus (70) for crystallizing polyester material in granulate form, comprising three successive sections (80, 90, 100)
    at least one inlet opening (110) provided in the first section (80),
    at least one outlet opening (120) provided in the third section (100),
    a means for effecting mechanical disturbance of the polyester material (130) provided in the first and second sections (80, 90),
    at least one gas inlet opening (140) arranged in the transitional area between first and second section (80, 90), and
    at least one gas outlet opening (150, 160) provided in both the first (80) and third section (100).

17. The apparatus according to claim 16 in which the means (130) comprises a shaft (170) on which at least one arm (180) is provided.

**18.** The apparatus according to claim 16, in which the means for effecting mechanical disturbance of the polyester material comprises a first shaft and a second shaft, at least one arm being provided on each shaft.


**Revendications**

**1.** Procédé de production de polyesters, comprenant,
une cristallisation d'un matériau polyester,
**caractérisé en ce que** la cristallisation est effectuée en deux étapes, à savoir
que dans une 1. étape, on prépare un matériau polyester partiellement cristallin, et
que dans une 2. étape, le matériau polyester partiellement cristallin s'écoule, à des températures adaptées à la cristallisation, (i) en étant soumis à une perturbation mécanique et à un écoulement de gaz à contre-courant, (ii) en étant soumis à une perturbation mécanique et à un écoulement de gaz de même sens, et (iii) sans perturbation mécanique et en étant soumis à un écoulement de gaz dans le même sens.

**2.** Procédé selon la revendication 1, le matériau polyester partiellement cristallin préparé dans la 1. étape présentant un degré de cristallisation d'environ 40 à environ 48%.

**3.** Procédé selon l'une des revendications précédentes, le matériau polyester partiellement cristallin étant préparé dans la 1. étape en traitant le matériau polyester par tourbillonnement ou fluidisation dans un écoulement de gaz et à des températures croissantes d'environ 170 à environ 210 °C, pour une durée de séjour allant jusqu'à environ 30 minutes.

**4.** Procédé selon la revendication 3, le tourbillonnement ou la fluidisation du matériau polyester étant effectué dans un appareil de cristallisation à lit fluidisé.

**5.** Procédé selon la revendication 4, le tourbillonnement ou la fluidisation dans la 1. étape étant effectué dans une 1. zone dans un lit fluidisé à caractéristique de mélange, et dans une 2. zone dans un lit fluidisé à écoulement de granules contrôlé.

**6.** Procédé selon la revendication 5, le tourbillonnement ou la fluidisation étant effectué avec du gaz présentant une vitesse de gaz d'environ 3,2 à 4 m/s dans: la 1. zone, et une vitesse de gaz d'environ 2,1 à 2,7 m/s dans la 2. zone.

**7.** Procédé selon l'une des revendications précédentes, la température mise en oeuvre dans la 2. étape étant d'environ 190 à environ 220 °C.

**8.** Procédé selon l'une des revendications précédentes, la durée de séjour dans la 2. étape (i) étant d'environ 30 à environ 60 minutes, dans la 2. étape (ii) d'environ 30 à environ 60 minutes, et dans la 2. étape (iii) d'environ 60 à environ 180 minutes.

**9.** Procédé selon l'une des revendications précédentes, la 2. étape étant effectuée dans un appareil de cristallisation en forme de puits ou de tour.

**10.** Procédé selon l'une des revendications précédentes, le matériau polyester utilisé étant sous forme de granules, de préférence des granules en forme de billes sphériques.

**11.** Procédé selon l'une des revendications 2 à 10, la durée de séjour totale du matériau polyester dans la 1. et la 2. étape étant d'environ 100 à 350 minutes.

**12.** Procédé selon l'une des revendications 2 à 11, le rapport de durée de séjour du matériau polyester dans la première étape par rapport à la 2. étape étant d'environ 1:4 à 1:32.

**13.** Procédé selon l'une des revendications précédentes, le matériau polyester qui est mis en oeuvre dans la cristallisation, présentant une viscosité intrinsèque (I.V.) d'au moins 0,3 dl/g.

**14.** Procédé pour la fabrication de corps moulés en polyester, **caractérisé en ce que** l'on utilise du matériau polyester pouvant être obtenu selon l'une des revendications précédentes, sans polycondensation en phase solide.

**15.** Procédé selon la revendication 14, les corps moulés en polyester étant choisis parmi le groupe constitué de bouteilles, feuilles, films et fils techniques hautement résistants.

**16.** Dispositif (70) pour la cristallisation de matériau polyester sous forme de granules, comprenant trois tronçons (80, 90, 100) successifs,
au moins une ouverture d'entrée (110) qui est prévue dans le premier tronçon (80),
au moins une ouverture de sortie (120) qui est prévue dans le troisième tronçon (100),
un mécanisme pour produire une perturbation mécanique pour le matériau polyester (130), qui est prévu dans le premier et le second tronçon (80, 90),
au moins une ouverture d'entrée de gaz (140), qui est disposée dans la zone de transition du premier au second tronçon (80, 90), et
au moins une ouverture de sortie de gaz (150, 160), qui est prévue aussi bien dans le premier (80) que dans le troisième tronçon (100).

**17.** Dispositif selon la revendication 16, dans lequel le mécanisme (130) comprend un arbre (170) sur lequel est prévu au moins un bras (180).

**18.** Dispositif selon la revendication 16, dans lequel le mécanisme destiné à produire une perturbation mécanique pour le matériau polyester comprend un premier arbre et un second arbre, au moins un bras étant prévu sur chaque arbre.

Fig. 1

Fig. 2